# EUROPÄISCHE PATENTSCHRIFT

(11) **EP 0 765 698 B1**
(45) Veröffentlichungstag und Bekanntmachung des Hinweises auf die Patenterteilung: **08.07.1998**
(21) Anmeldenummer: 95114453.4
(22) Anmeldetag: 14.09.1995
(51) Int. Cl.: B21C 37/04, C21D 9/00

(54) **Verfahren zur Herstellung von metallischen Konstruktionselementen mit unterschiedlichen Wanddicken**
Method of producing metal constructional elements with differential wall thickness
Procédé de fabrication d'éléments de construction métalliques à épaisseur de paroi différent

(43) Veröffentlichungstag der Anmeldung: 02.04.1997
(73) Patentinhaber: BENTELER AG, D-33104 Paderborn (DE)
(72) Erfinder: Olszewski, Egon, D - 33106 Paderborn (DE); Hansen, Rainer, D - 33106 Paderborn (DE); Töpker, Dieter, Dr., D - 33100 Paderborn (DE); Streubel, Wolfgang, D - 32758 Detmold (DE)
(74) Vertreter: Bockermann, Rolf, Dipl.-Ing.

(56) Entgegenhaltungen:
- EP-A- 0 054 343
- EP-A- 0 078 551
- EP-A- 0 259 580
- EP-B- 0 279 866
- DE-A- 3 343 709
- DE-C- 102 263
- DE-C- 357 748

## Beschreibung

Die Erfindung betrifft ein verfahren zur Herstellung von metallischen Konstruktionselementen mit unterschiedlichen Wanddicken für die Fertigung von Karosserieteilen oder Fahrwerkskomponenten von Kraftfahrzeugen durch verformung eines annähernd gleichmäßig dicken Ausgangsmaterials.

Eine bereichsweise Wanddickenreduktion wird üblicherweise bei solchen Bauteilen vorgenommen, die unter äußerer Belastung stehen, wobei die auftretenden Spannungen aufgrund der Bauteilkonstruktion verteilt über das Bauteil in unterschiedlicher Höhe vorliegen. Beispiele für derart unterschiedlich stark belastete Bauteile sind Karosserieteile oder Fahrwerkskomponenten von Kraftfahrzeugen. Werden die Bauteile nach der Maximalbelastung dimensioniert, führt das nicht nur zu einem unnötigen Materialeinsatz, sondern vor allem auch zu einem unnötigen Gewicht.

Diese Nachteile können dadurch vermieden werden, daß die Bauteile entsprechend ihrer späteren Belastung in den einzelnen Bereichen unterschiedlich dimensioniert sind.

Bauteile dieser Art werden aus Konstruktionselementen wie Platinen aus Stahlblech, Rohren, Stäben oder Trägern gefertigt. Aus diesem Grund ist es bekannt, solche Konstruktionselemente vor der Weiterverarbeitung mit unterschiedlichen Wanddicken zu versehen, um auf diese Weise einerseits den zu erwartenden späteren Belastungen gerecht zu werden und andererseits entsprechend Material und damit Gewicht einzusparen.

Im Rahmen der EP-B-0 279 866 wird vorgeschlagen, Konstruktionselemente entweder aus schon verformten einzelnen Blechteilen unterschiedlicher Dicke zusammenzuschweißen oder unterschiedlich dicke Blechteile zunächst zusammenzuschweißen und dann insgesamt zu einem Tragkörper zu verformen. Die Schweißarbeiten werden mittels Laser- oder Plasmaschweißverfahren verrichtet.

Neben dem zusätzlichen verfahrenstechnischen und finanziellen Aufwand wirkt sich bei derartigen Konstruktionselementen der diskontinuierliche Übergang an den Nahtstellen aus. Beim Zusammenfügen der Teile unterschiedlicher Dicke ist zwangsläufig ein stufenartiger Übergang vorhanden. Hier kann es zu unerwünschten Spannungsspitzen kommen. Desweiteren können in den Bereichen neben den Schweißnähten Gefügeveränderungen auftreten.

Es gehört weiterhin zum Stand der Technik, eine bereichsweise Wanddickenreduktion von ausgestanzten Platinen durch Umformwerkzeuge, insbesondere durch Walzen, zu erreichen. Hierbei wird die Ausgangsdicke der Platine um die jeweilige Streckung beim Walzvorgang verkleinert. Eine walztechnische Wanddickenreduktion ist beispielsweise in der DE-A-33 43 709 beschrieben. Derartige Verfahren sind jedoch auf den Einsatz bei höherfesteren Materialien beschränkt. Nachteilig ist insbesondere der direkte Kontakt zwischen den Umformwerkzeugen und dem Werkstoff zur Krafteinleitung. Dies führt zwangsläufig zu einem Verschleiß der Werkzeuge. Die Standzeit der Werkzeuge ist folglich begrenzt. Damit können unerwünschte Stillstände der Anlage auftreten. Zusätzliche Kosten entstehen für die Aufarbeitung und Instandsetzung der Werkzeuge.

Aus der EP-A-0 259 580 ist es bekannt, eine Stange oder einen Draht in einem Durchlaufverfahren partiell zu erwärmen und abzustrecken, wobei im Bereich der partiellen Erwärmung eine Querschnittsverjüngung eintritt. Die so behandelten Drähte oder Stangen sind ein Vormaterial für die Herstellung von Schraubenfedern. Die gleiche Vorgehensweise geht aus der EP-A-0 054 343 hervor.

Der Erfindung liegt ausgehend vom Stand der Technik die Aufgabe zugrunde, ein Verfahren zu schaffen, welches eine rationelle und ökonomische Fertigung von Karosserieteilen und Fahrwerkskomponenten für Kraftfahrzeuge ermöglicht, welche entsprechend ihrer späteren Belastung gezielt bereichsweise mit unterschiedlichen Wanddicken versehen sind.

Die Aufgabe wird erfindungsgemäß durch ein Verfahren nach Anspruch 1 gelöst, bei dem der zu verformende Bereich eines Ausgangsprofils erwärmt und das Ausgangsprofil unter den Einfluß einer quer zum erwärmten Bereich wirkenden Zugkraft gestellt wird. Anschließend wird das Konstruktionselement zum Karosserieteil oder zur Fahrwerkskomponente umgeformt.

Vorteilhafte Ausgestaltungen des erfindungsgemäßen Grundgedankens bilden Gegenstand der abhängigen Ansprüche 2 bis 7.

Das erfindungsgemäße Verfahren kann bei Ausgangsprofilen unterschiedlichster Konfiguration angewandt werden. Hierbei kann es sich um unverformte oder bereits verformte Platinen handeln. Auch können Rohre oder andere Hohlkörperprofile ebenso wie Stäbe bereichsweise mit unterschiedlichen Dicken versehen werden.

Das Ausgangsprofil ist annähernd gleichmäßig dick. Lediglich die herstellungstechnisch bedingten Dickenschwankungen im üblichen Toleranzbereich sind vorhanden. Unter dem Einfluß der Temperatur und der angreifenden Zugkraft wird das Ausgangsprofil in seiner Länge vergrößert, wobei sich die Dicke im erwärmten Bereich reduziert, ohne daß ein Umformwerkzeug in diesem Bereich einwirkt.

Damit entsteht ein Konstruktionselement, das nunmehr in einem Bereich oder ggf. auch in mehreren Bereichen eine Wanddicke besitzt, die der Dicke des Ausgangsprofils entspricht. In anderen Bereichen ist die Wanddicke hingegen partiell reduziert worden. Bei der Größe des Ausgangsprofils wird im Rahmen der Erfindung bereits berücksichtigt, daß das hieraus gefertigte Konstruktionselement unterschiedliche Wanddicken besitzen soll. Dementsprechend wird das Ausgangsprofil um ein solches Maß kleiner hergestellt bzw. bereitgestellt, welches durch die anschließende Wanddickenreduktion mit der damit verbundenen Längenänderung ausgeglichen wird. Nach der Wanddickenreduktion weist das Konstruktionselement die zur Weiterverarbeitung erforderliche Baugröße auf. Die durch die Wanddickenreduktion erreichte Volumenänderung des Konstruktionselements spiegelt sich in der Gewichtseinsparung am fertigen Bauteil wieder.

Die Erwärmung des zu verformenden Bereichs kann in unterschiedlicher Weise vorgenommen werden.

Eine Ausführungsform des erfindungsgemäßen Verfahrens sieht die Nutzung von mittels elektrischer Energie erzeugter Wärme vor. Hier bietet sich die Widerstandserwärmung oder die induktive Erwärmung an. Grundsätzlich ist auch eine dielektrische Erwärmung mittels eines hochfrequenten elektrischen Wechselfelds denkbar.

In einer anderen Ausführungsform erfolgt die Erwärmung durch Strahlung, bei der die Wärme durch Verbrennung gewonnen wird. Die Wärmequelle kann hier in Form eines Brenners bereitgestellt werden.

Grundsätzlich ist es möglich, den zu verformenden Bereich im ganzen gleichmäßig zu erwärmen. Die Breite der Erwärmungszone wird entsprechend den jeweiligen Erfordernissen eingestellt. Durch die von außen aufgebrachte Zugkraft wird die Dicke der Wand in diesem erwärmten Bereich reduziert.

Eine besonders vorteilhafte Ausgestaltung des erfindungsgemäßen Verfahrens sieht vor, daß der zu verformende Bereich in Richtung der und/oder gegen die Richtung der wirkenden Zugkraft kontinuierlich fortschreitend erwärmt wird. Hierbei wird die Wärmequelle bzw. der Wärmeerzeuger (Induktionsspule, Widerstandsheizer, Brenner) über den zu verformenden Bereich bewegt. Die Bewegung kann dabei in Längs- oder Querrichtung zur Hauptachse des Konstruktionselements vorgenommen werden.

Wesentliche Verfahrensparameter hierbei sind die Geschwindigkeit, mit der die Wärmequelle bewegt wird bzw. mit der sich die Erwärmungszone bewegt, die Einflußtemperatur und die aufgebrachte Zugkraft. Die Erfindung macht sich die Erkenntnis zu eigen, daß es durch das Zusammenwirken und die gezielte Abstimmung der Verfahrensparameter aufeinander entsprechend den materialspezifischen Kenngrößen des Konstruktionselements möglich ist, eine präzise Wanddickenreduktion vorzunehmen. Die Höhe der angreifenden Zugkraft liegt unterhalb der Materialfließgrenze. Durch die Erwärmung wird im Wärmeeinflußbereich die Fließgrenze so weit herabgesetzt, daß das Material unter der wirkenden Zugspannung zu fließen beginnt. Es kommt dann zur Verformung des Konstruktionselements unmittelbar im Bereich der Erwärmung. Nachteilige Gefügeveränderungen oder Qualitätseinbußen werden vermieden. Eine Krafteinleitung durch ein Umformwerkzeug in der Umformzone, also dem zu verformenden Bereich, ist nicht erforderlich.

Ein kontinuierlich fortschreitender Verformungsablauf wird erreicht, indem die Wärmequelle in Zugrichtung bewegt wird, und zwar mit einer solchen Geschwindigkeit, daß sich jeweils der unter dem unmittelbaren Einfluß der Erwärmung stehende Bereich entsprechend der vorgeplanten Wanddickenreduktion verformt.

Es hat sich herausgestellt, daß bei den derzeit eingesetzten Werkstoffen für die Fertigung von Kraftfahrzeugkomponenten die Einflußtemperatur in Abhängigkeit von der äußeren Zugkraft in einem Temperaturbereich zwischen 350°C und 750°C zu führen ist.

Insgesamt ermöglicht das erfindungsgemäße Verfahren eine bereichsweise präzise Wanddickenreduktion und damit die Herstellung von material- und gewichtssparenden Konstruktionselementen, ohne daß Verformungswerkzeuge direkt auf den Werkstoff in der Umformzone einwirken, wie dies beispielsweise beim Walzen oder Strecken notwendig ist.

Die Konturänderungen am Konstruktionselement können ohne einen mechanischen Kontakt der Wärmequelle durchgeführt werden. Die Wärmequelle, beispielsweise eine Induktionsspule oder ein Brenner, wird dann in einem ausreichend großen Abstand zur Kontur des Konstruktionselements geführt.

Nach der Fertigstellung werden die Konstruktionselemente mittels konventionellen Umformverfahren oder mittels Innenhochdruckverfahren weiterverarbeitet und in ihre endgültige Form gebracht.

Das erfindungsgemäße Verfahren ist nachfolgend unter Bezugnahme auf die beigefügten schematischen Zeichnungen beschrieben, in denen der Vorgang einer Wanddickenreduktion durch bereichsweise Erwärmung mittels einer Induktionsspule und äußerer Zugkraft am Beispiel einer flachen Platine und einem Rohr dargestellt ist.

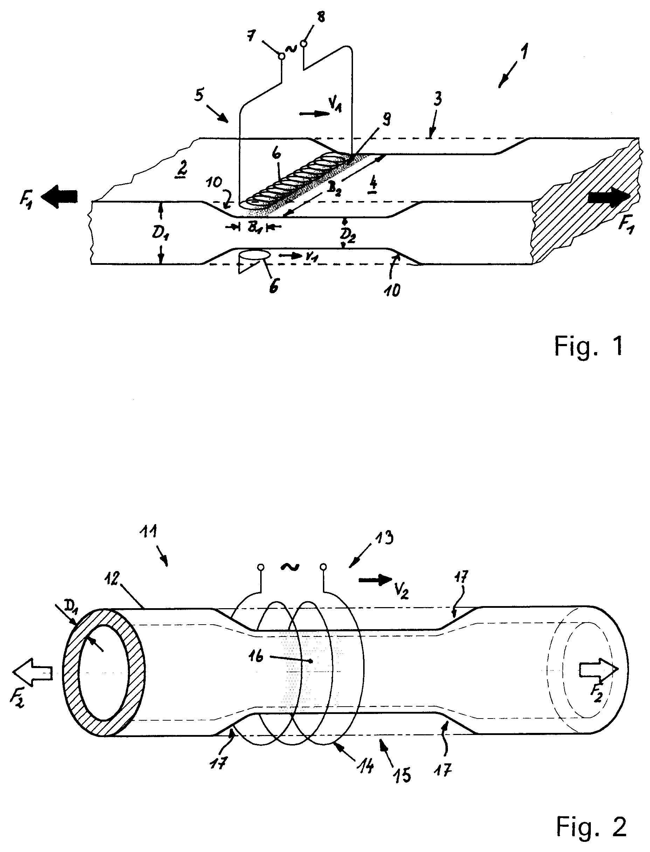

In der Figur 1 ist ein Konstruktionselement 1 mit einer bereichsweisen Wanddickenreduktion dargestellt. Das Konstruktionselement 1 wird aus einem Ausgangsprofil 2, welches zunächst als eine annähernd gleichmäßig dicke Platine 3 vorliegt, hergestellt. Der zu verformende Bereich 4 wird durch eine Wärmequelle 5 in Form einer Induktionsspule 6 kontinuierlich fortschreitend erwärmt. Die Stromversorgung der Induktionsspule 6 erfolgt über die Anschlüsse 7, 8.

Die induktive Erwärmung findet in der gepunktet dargestellten Erwärmungszone 9 statt. Unter dem Einfluß einer quer zur Erwärmungszone 9 wirkenden Zugkraft F₁ erfährt die Platine 3 die gewünschte Wanddickenreduktion.

Die Höhe der Zugkraft F₁ liegt unterhalb der Materialfließgrenze, die der Werkstoff der Platine 3 bei Raumtemperatur aufweist. Erst durch die Erwärmung wird in der Erwärmungszone 9 die Fließgrenze so weit herabgesetzt, daß das Material unter der wirkenden Zugspannung F₁ fließt.

Die Wärmequelle 5 wird entlang des zu verformenden Bereichs 4 bewegt. Damit schreitet auch die Erwärmungszone 9 kontinuierlich fort. Die Geschwindigkeit v₁, mit der die Wärmequelle 5 bewegt wird, die Höhe der aufgebrachten äußeren Zugkraft F₁ und die Höhe der Temperatur sowie die Breiten B₁ und B₂ in Längs- bzw. Querrichtung des Wärmeeinflußbereichs sind so aufeinander abgestimmt, daß eine kontinuierliche Verformung der Platine 3 unmittelbar im Bereich der Erwärmung erfolgt. Die Wanddicke wird dadurch von der Ausgangsdicke D₁ auf die Dicke D₂ mit einem weichen fließenden Übergang in den Bereichen 10 reduziert.

Die Figur 2 zeigt ein Konstruktionselement 11 aus einem Rohr 12 mit anfänglich gleichmäßiger Wanddicke D₁. Eine Wärmequelle 13 ist wiederum in Form einer Induktionsspule 14 dargestellt. Der zu verformende Bereich 15 wird mittels der Induktionsspule 14 kontinuierlich fortschreitend erwärmt. Im Bereich der Einwirkung der Induktionsspule 14 bildet sich die Erwärmungszone 16 aus. In Abhängigkeit von dem materialspezifischen Kenngrößen des Ausgangsmaterials kann die Temperatur in der Erwärmungszone zwischen 350 °C und 750 °C betragen. Während die Induktionsspule 14 mit der Geschwindigkeit v₂ über den zu verformenden Bereich 15 geführt wird, steht das Rohr 12 unter dem Einfluß der Zugkraft F₂, welche in der Hauptrichtung des Rohrs 12 wirkt. Unter dem Einfluß der hierdurch erzeugten Zugspannung und der Erwärmung kommt es zur Verformung des Rohrs 12 in der Erwärmungszone 16. Durch die aufeinander abgestimmten Verfahrensparameter stellt sich die Wandverdünnung auf die Dicke D₂ ein, wobei gleichzeitig das Rohr 12 in der Zugrichtung verlängert wird. Die Übergänge 17 an den Rändern des zu verformenden Bereichs 15 sind stufenlos.

Nachdem der gesamte Verformungsbereich 15 von der Wärmequelle 13 unter kontinuierlichem Fortschritt der Wanddickenreduktion überstrichen worden ist, ist das Konstruktionselement 11 fertiggestellt und kann der Weiterverarbeitung zugeführt werden.

### Bezugszeichenaufstellung

- 1: - Konstruktionselement
- 2: - Ausgangsprofil
- 3: - Platine
- 4: - Verformungsbereich
- 5: - Wärmequelle
- 6: - Induktionsspule
- 7: - Anschluß
- 8: - Anschluß
- 9: - Erwärmungszone
- 10: - Übergangsbereich
- 11: - Konstruktionselement
- 12: - Rohr
- 13: - Wärmequelle
- 14: - Induktionsspule
- 15: - Verformungsbereich
- 16: - Erwärmungszone
- 17: - Übergang
- B₁: - Breite
- B₂: - Breite
- D₁: - Ausgangsdicke
- D₂: - reduzierte Dicke
- F₁: - Zugkraft
- F₂: - Zugkraft
- v₁: - Geschwindigkeit
- v₂: - Geschwindigkeit

## Patentansprüche

1. Verfahren zur Herstellung von metallischen Konstruktionselementen (1, 11) mit unterschiedlichen Wanddicken (D₁, D₂) für die Fertigung von Karosserieteilen oder Fahrwerkskomponenten von Kraftfahrzeugen durch bereichsweise Verformung eines annähernd gleichmäßig dicken Ausgangsprofils (2, 12), bei welchem der zu verformende Bereich des Ausgangsprofils erwärmt und dieses erwärmte Ausgangsprofil (2, 12) unter den Einfluss einer quer zum erwärmten Bereich wirkenden Zugkraft (F₁, F₂) gestellt wird, und dass anschliessend das Konstruktionselement (1, 11) zum Karosserieteil oder zur Fahrwerkskomponente umgeformt wird.

2. Verfahren nach Anspruch 1, **dadurch gekennzeichnet,** dass das Ausgangsprofil (2, 2) um ein solches Maß kleiner als das Konstruktionselement (1, 11) bereitgestellt wird, welches durch die anschließende Wanddickenreduktion mit der damit verbundenen Längenänderung ausgeglichen wird.

3. Verfahren nach Anspruch 1 oder 2, **dadurch gekennzeichnet,** daß der zu verformende Bereich in Richtung der und/oder gegen die Richtung der wirkenden Zugkraft (F₁, F₂) kontinuierlich fortschreitend erwärmt wird.

4. Verfahren nach Anspruch 3, **dadurch gekennzeichnet,** daß die Geschwindigkeit der Erwärmung relativ zum Ausgangsprofil (2, 12), die Einflußtemperatur auf das Ausgangsprofil (2, 12) sowie die Zugkraft (F₁, F₂) in Abhängigkeit von den materialspezifischen Kenngrößen des Ausgangsprofils (2, 12) gezielt aufeinander abgestimmt werden.

5. Verfahren nach Anspruch 1 oder 2, **dadurch gekennzeichnet,** daß der zu verformende Bereich im Ganzen gleichmäßig erwärmt wird.

6. Verfahren nach einem der Ansprüche 1 bis 5, **dadurch gekennzeichnet,** daß die Erwärmung durch elektrische Energie vorgenommen wird.

7. Verfahren nach einem der Ansprüche 1 bis 5, **dadurch gekennzeichnet,** daß die Erwärmung durch Strahlung vorgenommen wird.

## Claims

1. A method of producing metal structural elements (1, 11) of different wall thicknesses (D₁, D₂) for the manufacture of bodywork parts or chassis components for motor vehicles by zonal deformation of a substantially uniformly thick starting profile (2, 12), wherein the zone of the starting profile (2, 12) for deformation is heated and the said heated starting profile is subjected to the influence of a tractive force (F₁, F₂) acting transversely of the heated zone, and in that the structural element (1, 11) is then subjected to deformation to form the bodywork part or chassis component.

2. A method according to claim 1, characterised in that the starting profile (2, 2) is provided in a size smaller than the structural element (1, 11) such that the subsequent reduction in wall thickness equalises it as a result of the associated change of length.

3. A method according to claim 1 or 2, characterised in that the zone for deformation is continuously progressively heated in the direction of and/or in opposition to the direction of the operative tractive force (F₁, F₂).

4. A method according to claim 3, characterised in that the rate of heating relatively to the starting profile (2, 12), the influencing temperature on the starting profile (2, 12) and the tractive force (F₁, F₂) are controlledly co-ordinated in dependence on the material-specific characteristics of the starting profile (2, 12).

5. A method according to claim 1 or 2, characterised in that the zone for deformation is heated uniformly throughout.

6. A method according to any one of claims 1 to 5, characterised in that the heating is effected by electrical energy.

7. A method according to any one of claims 1 to 5, characterised in that the heating is effected by radiation.

## Revendications

1. Procédé pour la fabrication d'éléments de construction métalliques (1, 11) avec différentes épaisseurs de paroi (D₁, D₂) pour la réalisation de pièces de carrosseries ou de composants de véhicules automobiles par déformation locale d'un profit de départ (2, 12) d'une épaisseur approximativement uniforme, procédé dans lequel la zone à déformer du profité de départ est chauffée et ce profité de départ chauffé est exposé à l'influence d'une force de traction (F₁, F₂) agissant transversalement par rapport à la zone chauffée et en ce que consécutivement l'élément de construction (1, 11) pour la pièce de carrosserie ou pour le composant de véhicule est déformé.

2. Procédé selon la revendication 1, caractérisé en ce que le profité de départ (2, 2) est préparé pour se situer à une dimension inférieure telle à l'élément de construction (1, 11) que par la réduction d'épaisseur de paroi consécutive, on obtient un équilibre avec la modification de longueur associée.

3. Procédé selon la revendication 1 ou 2, caractérisé en ce que la zone à déformer dans la direction et/ou en opposition à la direction de l'effort de traction qui est exercé, est chauffée de façon progressive en continu.

4. Procédé selon la revendication 3, caractérisé en ce que la vitesse du chauffage par rapport au profité de départ (2, 12), la température d'incidence sur le profité de départ (2, 12) ainsi que la force de traction (F₁, F₂) sont adaptées spécifiquement aux caractéristiques inhérentes au matériau du profité de départ (2, 12).

5. Procédé selon la revendication 1 ou 2, caractérisé en ce que ta zone à déformer est chauffée dans l'ensemble de façon régulière.

6. Procédé selon l'une des revendications 1 à 5, caractérisé en ce que le chauffage s'effectue par l'énergie électrique.

7. Procédé selon l'une des revendications 1 à 5, caractérisé en ce que le chauffage s'effectue par rayonnement.
